# EUROPEAN PATENT APPLICATION

(11) **EP 4 418 750 A1**
(43) Date of publication of application: **21.08.2024**
(21) Application number: 22900021.1
(22) Date of filing: 07.09.2022
(51) Int. Cl.: H04W 52/02, H04L 5/00

(54) **COMMUNICATION METHOD AND DEVICE**

(30) Priority: 30.11.2021 CN 202111440779
(71) Applicant: Huawei Technologies Co., Ltd., Shenzhen, Guangdong 518129 (CN)
(72) Inventor: TIE, Xiaolei, Shenzhen, Guangdong 518129 (CN); ZHOU, Han, Shenzhen, Guangdong 518129 (CN); HUA, Meng, Shenzhen, Guangdong 518129 (CN)
(74) Representative: Pfenning, Meinig & Partner mbB
(86) International application number: PCT/CN2022/117648
(87) International publication number: WO 2023/098212

(57) **Abstract**

Embodiments of this application provide a communication method and a device. In the method, a base station may use a wake-up signal WUS to carry an indication indicating a cell managed by the base station. A terminal device in a non-connected state receives the WUS, and this indicates that the terminal device is in a coverage area of the cell indicated by the indication. Then, the terminal device may listen to paging or initiate random access in the cell. According to the method, the terminal device in the non-connected state may determine, by using the WUS, whether the terminal device is still in a coverage area of a cell on which the terminal device previously camps, to implement mobility management. Further, after receiving the WUS, the terminal device in the coverage area of the cell indicated by the indication included in the WUS may listen to paging or initiate random access in the cell. This can increase a probability of successfully detecting paging or initiating random access, thereby increasing a communication success probability of the terminal device and reducing unnecessary power consumption.

## Description

### CROSS-REFERENCE TO RELATED APPLICATIONS

This application claims priority to Chinese Patent Application No. 202111440779.5, filed with the China National Intellectual Property Administration on November 30, 2021 and entitled "COMMUNICATION METHOD AND DEVICE", which is incorporated herein by reference in its entirety.

### TECHNICAL FIELD

This application relates to the field of communication technologies, and in particular, to a communication method and a device.

### BACKGROUND

To reduce power consumption of a terminal device, currently the 3rd generation partnership project (3rd Generation Partnership Project, 3GPP) release 16 (Release 16, R16 for short) standard mainly studies a power consumption optimization solution for a terminal device in a connected state, and the release 17 (Release 17, R17 for short) standard mainly studies a power consumption optimization solution for a terminal device in an idle state and an inactive state.

Main power consumption activities of the terminal device in the idle state and the inactive state include paging listening, sleep, and data transmission in the inactive state. To further reduce power consumption of the terminal device in the idle state and the inactive state, a working mode based on a primary module and a secondary module is proposed. A principle of the working mode is as follows:

A terminal device includes a primary module and a secondary module. Power consumption of the secondary module is low, and is usually at a microwatt (microwatt, µW) magnitude or even a nanowatt (nanowatt, nW) magnitude. Power consumption of the primary module is high, and is usually at a milliwatt (milliwatt, mW) magnitude. The primary module is responsible for basic functions of the terminal device, including radio resource management (radio resource management, RRM) measurement, paging, cell reselection, cell handover, various application (application, app) layer functions, and the like. There is a communication connection between the secondary module and the primary module. After receiving a wake-up signal (wake-up signal, WUS), the secondary module may wake up the primary module, so that the primary module restores a function of the primary module. The WUS may be an excitation signal such as amplitude shift keying (amplitude shift keying, ASK).

Based on this, in the idle state and the inactive state, the terminal device may enable the secondary module and set the primary module to be in a disabled state or an extremely low power consumption state, and cannot perform tasks such as paging listening and RRM measurement. The secondary module wakes up the primary module after receiving a WUS from a base station, and the primary module may start a series of actions such as paging listening and RRM measurement, to ensure a function of the terminal device.

In a mobile communication system, the terminal device mainly depends on periodic RRM measurement to determine whether the terminal is within a coverage area of a current serving cell, so as to perform cell handover or reselection. However, in some cases, the terminal device may not be able to perform RRM measurement, or a measurement result obtained through RRM measurement has a large error. Consequently, the terminal device cannot accurately determine whether the terminal device is still in a serving cell on which the terminal device previously camps, and mobility management performance of the terminal device is reduced. For example, as the terminal device moves, the terminal device may have left a cell on which the terminal device previously camps, but if the terminal device still listens to paging or initiates random access in the original camping cell, a communication failure probability and unnecessary power consumption are increased.

### SUMMARY

This application provides a communication method and a device, to implement mobility management of a terminal device, and reduce a communication failure probability and unnecessary power consumption of the terminal device.

According to a first aspect, an embodiment of this application provides a communication method. The method may be applied to a terminal device, and the method includes the following steps.

The terminal device receives, in a non-connected state, a wake-up signal WUS from a base station, where the WUS includes a first indication, the first indication indicates a first cell managed by the base station, and the WUS indicates the terminal device to listen to paging or initiate random access; and when the first cell indicated by the first indication is different from a second cell, the terminal device listens to paging or initiates random access in the first cell based on the WUS, where the second cell is a cell on which the terminal device camps before the terminal device receives the WUS.

According to the method, the base station may use the WUS to carry an indication indicating a cell managed by the base station. The terminal device in the non-connected state receives the WUS, and this indicates that the terminal device is in a coverage area of the cell indicated by the indication. Then, the terminal device may listen to paging or initiate random access in the cell. According to the method, the terminal device in the non-connected state may determine, by using the WUS, whether the terminal device is still in a coverage area of a cell on which the terminal device previously camps, to implement mobility management. Further, after receiving the WUS, the terminal device in the coverage area of the cell indicated by the indication included in the WUS may listen to paging or initiate random access in the indicated cell. This can increase a probability of successfully detecting paging or initiating random access, and avoid a case in which the terminal device may have left a cell on which the terminal device previously camps but the terminal device still performs paging or initiates random access in the original camping cell, thereby increasing a communication success probability of the terminal device and reducing unnecessary power consumption.

In a possible design, the first indication is determined based on an identifier of the first cell, or is information that identifies the first cell in a tracking area; and the terminal device may further determine, in the following manners, whether the first cell indicated by the first indication is the same as the second cell.

Manner 1: Determine the identifier of the first cell based on a first mapping relationship and the first indication, where the first mapping relationship is a correspondence between the first indication and the identifier of the first cell; and determine whether the identifier of the first cell is the same as a stored identifier of the second cell, where when the identifiers of the two cells are the same, the two cells are the same; or when the identifiers of the two cells are different, the two cells are different.

Manner 2: Determine a second indication based on a second mapping relationship and an identifier of the second cell, where the second indication indicates the second cell, and the second mapping relationship is a correspondence between the second indication and the identifier of the second cell; and determine whether the first indication is the same as the second indication indicating the second cell, where when the two indications are the same, the two cells are the same; or when the two indications are different, the two cells are different.

The identifier of the first cell is a cell global identity CGI or a physical cell identity PCI of the first cell, and the identifier of the second cell is a CGI or a PCI of the second cell.

In the manner 1 in this design, the terminal device may determine, based on the stored first mapping relationship, the identifier of the first cell indicated by the first indication, and then determine, by determining whether the identifier of the first cell is the same as the identifier of the second cell, whether the first cell is the same as the second cell. In the manner 2 in this design, the terminal device may determine, based on the stored second mapping relationship, the second indication indicating the second cell, and then determine, by determining whether the first indication is the same as the second indication, whether the first cell is the same as the second cell.

In a possible design, the first mapping relationship or the second mapping relationship is preconfigured, for example, configured before delivery of the terminal device, or is specified in a communication protocol, or is preconfigured by the base station or a core network device (for example, an AMF). This is not limited in this application.

In a possible design, when the first cell indicated by the first indication is the same as the second cell, the terminal device may further determine whether a system message (which includes a system information block 1 (SIB1), and optionally, may further include another type of SIB) of the second cell fails; and if the system message of the second cell does not fail, listen to paging or initiate random access based on a configuration in the system message of the second cell; or if the system message of the second cell fails, receive a system message of the second cell based on the identifier of the second cell, and listen to paging or initiate random access based on a configuration in the system message of the second cell. Valid duration for the terminal device to store a system message is specified in a mobile communication system. When the terminal device previously receives the system message of the second cell (for example, a SIB 1 of the second cell), the terminal device may start a valid timer of the system message (a value of the valid timer is set to valid duration of the system message) and start timing. When the valid timer expires, it indicates that the system message of the second cell fails. In a timing process of the valid timer, the system message of the second cell is valid. In this possible design, because a cell may transmit a plurality of types of system messages, if it is determined that a system message of a specific type fails, a system message of this type may be received, thereby ensuring that a configuration in the system message of this type is valid when the system message of this type is used.

When the first cell indicated by the first indication is the same as the second cell, it indicates that the terminal device in the non-connected state is still in a coverage area of the second cell. According to this design, the terminal device may determine, based on the first indication included in the WUS, that currently the terminal device is still in the coverage area of the second cell, and may continue to camp on the second cell, and listen to paging in the second cell.

In a possible design, the terminal device may listen to paging or initiate random access in the first cell based on the WUS by using the following steps.

First, the terminal device determines the identifier of the first cell based on the first indication, where the identifier of the first cell is a CGI or a PCI of the first cell. Then, the terminal device may receive a system message (which includes a SIB1, and optionally, may further include another SIB) of the first cell based on the identifier of the first cell, and listen to paging or initiate random access based on a configuration in the system message of the first cell. Optionally, the terminal device may generate a corresponding scrambling code based on the identifier of the first cell, and after descrambling the system message that is in the first cell and that is scrambled by using the scrambling code, perform demodulation and decoding, to obtain the system message.

According to this design, the terminal device may receive the system message of the first cell based on the identifier of the first cell, so that efficiency of receiving the system message of the first cell can be improved.

In a possible design, the terminal device may determine the identifier of the first cell based on the first indication in the following manners, but this is not limited.

Manner 1: Each time when the terminal device camps on a cell, if the terminal device stores information about the cell (including an identifier of the cell and an indication indicating the cell (referred to as a cell indication for short, for example, the first indication or the second indication)), the terminal device may determine the identifier of the first cell based on the first indication and information about the first cell that is included in information about at least one cell on which the terminal device historically camps. Information about any cell includes an identifier of the cell and a cell indication indicating the cell. The information about the first cell includes the identifier of the first cell and the first indication.

In this manner, the terminal device may search for the first indication from the information about the at least one cell on which the terminal device historically camps, and when the information about the first cell including the first indication is found, the terminal device may determine the identifier of the first cell included in the information about the first cell.

Manner 2: The terminal device may determine the identifier of the first cell based on the first mapping relationship and the first indication, where the first mapping relationship is the correspondence between the first indication and the identifier of the first cell.

According to this design, the terminal device may determine the identifier of the first cell based on the first indication, and then may receive the system message of the first cell based on the identifier of the first cell.

In a possible design, if the terminal device fails to determine the identifier of the first cell based on the first indication, the terminal device may camp on a third cell by searching for a network again, receive a system message of the third cell based on an identifier of the third cell, and listen to paging or initiate random access based on a configuration in the system message of the third cell.

According to this design, when the terminal device moves out of the coverage area of the second cell on which the terminal device previously camps and cannot learn, by using the first indication in the WUS, of a cell in which the terminal device is currently located, the terminal device may further camp on the third cell by searching for a network, thereby ensuring service continuity of the terminal device.

In a possible design, the WUS further includes indication information indicating the terminal device. In this way, after receiving the WUS, the terminal device may determine whether the terminal device is the terminal device indicated by the indication information in the WUS, and perform a subsequent step when the terminal device is the terminal device indicated by the indication information in the WUS.

For example, the indication information is an identifier of the terminal device. After receiving the WUS, the terminal device may determine whether an identifier included in the WUS is the same as the identifier of the terminal device, and perform a subsequent step when the two identifiers are the same (indicating that the WUS is sent to the terminal device).

For another example, when the indication information is obtained by the base station through calculation based on the identifier of the terminal device by using a specified rule, after receiving the WUS, the terminal device may first determine an identifier of a terminal device based on an indication in the WUS by using the specified rule, and then compare the identifier of the terminal device with the determined identifier of the terminal device. If the two identifiers are the same (indicating that the WUS is sent to the terminal device), the terminal device may perform a subsequent step; or if the two identifiers are different (indicating that the WUS is not sent to the terminal device), the terminal device does not perform a subsequent step.

In a possible design, the WUS is scrambled by the base station based on the identifier of the terminal device. In this case, after receiving the WUS, the terminal device may further descramble the WUS based on the identifier of the terminal device. If descrambling succeeds (indicating that the WUS is sent to the terminal device), the terminal device may perform a subsequent step; or if descrambling fails (indicating that the WUS is not sent to the terminal device), the terminal device does not perform a subsequent step.

According to the foregoing three designs, the base station may wake up a specific terminal device (for example, wake up a terminal device that meets an identifier of a specific terminal device). In this way, the terminal device is woken up in a targeted manner, so that flexibility of waking up the terminal device by the base station in the mobile communication system can be improved. Optionally, in the foregoing design, the identifier of the terminal device may be information that uniquely identifies the terminal device in a tracking area in which the terminal device is located.

According to a second aspect, an embodiment of this application provides a communication method. The method may be applied to a base station, and the method includes the following steps.

The base station generates a wake-up signal WUS, and sends the WUS, where the WUS includes a first indication, the first indication indicates a first cell managed by the base station, and the WUS indicates a terminal device to listen to paging or initiate random access.

According to the method, the base station may use the WUS to carry an indication indicating a cell managed by the base station. The terminal device in the non-connected state receives the WUS, and this indicates that the terminal device is in a coverage area of the cell indicated by the indication. Then, the terminal device may listen to paging or initiate random access in the cell. It is clear that, according to the method, the terminal device in the non-connected state may determine, by using the WUS, whether the terminal device is still in a coverage area of a cell on which the terminal device previously camps, to implement mobility management. Further, after receiving the WUS, the terminal device in the coverage area of the cell indicated by the indication included in the WUS may listen to paging or initiate random access in the indicated cell. This can increase a probability of successfully detecting paging or initiating random access, and avoid a case in which the terminal device may have left a cell on which the terminal device previously camps but the terminal device still performs paging or initiates random access in the original camping cell, thereby increasing a communication success probability of the terminal device and reducing unnecessary power consumption.

In a possible design, the first indication is determined based on an identifier of the first cell, or is information that identifies the first cell in a tracking area. The base station may determine the first indication based on a first mapping relationship and the identifier of the first cell, where the first mapping relationship is a correspondence between the first indication and the identifier of the first cell.

In a possible design, the first mapping relationship is preconfigured, for example, configured before delivery of the base station, or is specified in a communication protocol, or is preconfigured by a core network device (for example, an AMF). This is not limited in this application.

In a possible design, the WUS further includes indication information indicating the terminal device (for example, an identifier of the terminal device, or indication information obtained by the base station through calculation based on an identifier of the terminal device by using a specified rule); or the WUS is scrambled based on an identifier of the terminal device; and the base station may send the WUS to the terminal device based on the WUS.

According to this design, the base station may wake up a specific terminal device (for example, a terminal device that meets an identifier of a specific terminal device), so that flexibility of waking up the terminal device by the base station in a mobile communication system can be improved. Optionally, in the foregoing design, the identifier of the terminal device may be information that uniquely identifies the terminal device in a tracking area in which the terminal device is located.

According to a third aspect, an embodiment of this application provides a communication apparatus, including units configured to perform the steps in the first aspect or the second aspect.

According to a fourth aspect, an embodiment of this application provides a communication device, including at least one processing element and at least one storage element. The at least one storage element is configured to store a program and data, and the at least one processing element is configured to perform the method provided in the first aspect or the second aspect of this application.

According to a fifth aspect, an embodiment of this application further provides a communication system, including a terminal device configured to perform the method provided in the first aspect of this application and a base station configured to perform the method provided in the second aspect of this application.

According to a sixth aspect, an embodiment of this application further provides a computer program. When the computer program is run on a computer, the computer is enabled to perform the method provided in any one of the foregoing aspects.

According to a seventh aspect, an embodiment of this application further provides a computer-readable storage medium. The computer-readable storage medium stores a computer program, and when the computer program is executed by a computer, the computer is enabled to perform the method provided in any one of the foregoing aspects. Optionally, the computer may include at least the terminal device or the base station in the foregoing embodiments.

According to an eighth aspect, an embodiment of this application further provides a chip. The chip is configured to read a computer program stored in a memory, to perform the method provided in any one of the foregoing aspects.

According to a ninth aspect, an embodiment of this application further provides a chip system. The chip system includes a processor, configured to support a computer apparatus in implementing the method provided in any one of the foregoing aspects. In a possible design, the chip system further includes a memory, and the memory is configured to store a program and data that are necessary for the computer apparatus. The chip system may include a chip, or may include a chip and another discrete component.

### BRIEF DESCRIPTION OF DRAWINGS

FIG. 1 is a diagram of an architecture of a mobile communication system according to an embodiment of this application;
FIG. 2 is a flowchart of a communication method according to an embodiment of this application;
FIG. 3 is a flowchart of a communication method according to an embodiment of this application;
FIG. 4 is a flowchart of a communication method according to an embodiment of this application;
FIG. 5 is a diagram of a structure of a communication apparatus according to an embodiment of this application;
FIG. 6 is a diagram of a structure of a terminal device according to an embodiment of this application; and
FIG. 7 is a diagram of a structure of a base station according to an embodiment of this application.

### DESCRIPTION OF EMBODIMENTS

This application provides a communication method and a device, to implement mobility management of a terminal device, and reduce a communication failure probability and unnecessary power consumption of the terminal device. The method and the device are based on a same technical concept. Because problem-resolving principles of the method and the device are similar, mutual reference may be made to implementation of the device and the method. Repeated parts are not described again.

The following describes some terms in this application, to facilitate understanding of a person skilled in the art.
(1) A base station is a device that connects a terminal device to a wireless network in a communication system. As a node in a radio access network, the base station may also be referred to as a network device, may also be referred to as a radio access network (radio access network, RAN) node (or device), or may be referred to as an access point (access point, AP).
   Currently, some examples of the base station are: a next generation NodeB (generation NodeB, gNB), a transmission reception point (transmission reception point, TRP), an evolved NodeB (evolved NodeB, eNB), a NodeB (NodeB, NB), an access point (access point, AP), a home base station (for example, a home evolved NodeB, or a home NodeB, HNB), a baseband unit (baseband unit, BBU), an enterprise LTE discrete spectrum aggregation (Enterprise LTE Discrete Spectrum Aggregation, eLTE-DSA) base station, and the like.
   In addition, in a network structure, the base station may include a central unit (central unit, CU) node and a distributed unit (distributed unit, DU) node. In this structure, protocol layers of an eNB in a long term evolution (long term evolution, LTE) system are split. Functions of some protocol layers are centrally controlled by the CU. Functions of some or all remaining protocol layers are distributed in the DU, and the CU centrally controls the DU.
(2) A terminal device is a device that provides voice and/or data connectivity for a user. The terminal device may also be referred to as user equipment (user equipment, UE), a mobile station (mobile station, MS), a mobile terminal (mobile terminal, MT), or the like.
   For example, the terminal device may be a handheld device with a wireless connection function, various in-vehicle devices, a roadside unit, or the like. Currently, some examples of the terminal device are: a mobile phone (mobile phone), a tablet computer, a notebook computer, a palmtop computer, a mobile internet device (mobile internet device, MID), a smart point of sale (point of sale, POS), a wearable device, a virtual reality (virtual reality, VR) device, an augmented reality (augmented reality, AR) device, a wireless terminal in industrial control (industrial control), a wireless terminal in self-driving (self-driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), various smart meters (such as a smart water meter, a smart electricity meter, and a smart gas meter), eLTE-DSAUE, a device with an integrated access and backhaul (integrated access and backhaul, IAB) capability, an in-vehicle electronic control unit (electronic control unit, ECU), an in-vehicle computer, an in-vehicle cruise system, a telematics box (telematics box, T-BOX), and the like.
(3) A core network device is a network device in a core network in a mobile communication network, and is configured to implement a function of the core network.
   Generally, the core network may be divided into a control plane and a user plane based on logical functions. In the core network, a network element responsible for a control plane function may be collectively referred to as a control plane network element, and a network element responsible for a user plane function may be collectively referred to as a user plane network element. In embodiments of this application, the core network device is mainly a control plane network element, for example, an access and mobility management function (access and mobility management function, AMF).
(4) A WUS indicates a terminal device to listen to paging or initiate random access, and the WUS may also be referred to as a wake-up indication signal. The WUS may be carried in downlink control information (downlink control information, DCI), or may be carried in a specific signal. The specific signal may be modulated based on on-off keying (ON-Off Keying, OOK). In this way, the terminal device may detect the WUS by using a simple receiver with low power consumption (for example, a front-end (front-end) receiver).
(5) Atracking area (tracking area, TA) is a concept introduced for location management of a terminal device in a mobile communication system, and is defined as a free movement area in which the terminal device does not need to perform a tracking area update procedure. Location management of the terminal device may be implemented by setting the tracking area, and may be specifically divided into paging management and location update management. The tracking area may also be referred to as a paging tracking area. It should be noted that at least one cell may be configured as one tracking area, and one cell can be configured into only one tracking area.
   In the mobile communication system, the terminal device may notify, by using a tracking area update/registration procedure, a core network in the mobile communication system of a tracking area in which the terminal device is located.
   When the terminal device is in an idle state, the core network can learn of the tracking area in which the terminal device is located. When the terminal device in the idle state is paged, a base station may perform paging in all cells in a tracking area with which the terminal device is registered. When the terminal device crosses the tracking area, the terminal device may perform a cell update (cell update) procedure, to notify the core network that the terminal device enters a new tracking area.
(6) Radio resource control (radio resource control, RRC) connected state: In a mobile communication system, an RRC connection status of a terminal device has three types: an RRC connected state (RRC_connected, connected state for short), an RRC idle state (RRC_idle, idle state for short), and an RRC inactive state (RRC_inactive, inactive state for short).
   When the terminal device is in the idle state, an RRC connection between the terminal device and a base station is disconnected, the base station and the terminal device no longer store context information of the terminal device, and the terminal device may receive broadcast information (for example, a system message) and a paging message that are sent by the base station.
   When the terminal device is in the inactive state, an RRC connection between the terminal device and the base station is disconnected, but the base station and the terminal device continue to store the context information of the terminal device. When the terminal device enters the connected state from the inactive state, the base station and the terminal device may quickly establish an RRC connection between the terminal device and the base station based on the stored context information of the terminal device, so that the terminal device can quickly restore to the connected state.
   When the terminal device is in the connected state, there is an RRC connection between the terminal device and the base station, and the terminal device and the base station can communicate with each other through the RRC connection.
(7) "And/or" describes an association relationship of associated objects, and indicates that three relationships may exist. For example, A and/or B may indicate the following three cases: Only A exists, both A and B exist, and only B exists. The character "/" usually indicates an "or" relationship between the associated objects.

It should be noted that "a plurality of" in this application means two or more than two. "At least one" means one or more.

In addition, it should be understood that in the descriptions of this application, words such as "first" and "second" are merely used for distinguishing, and cannot be understood as an indication or implication of relative importance or an indication or implication of a sequence.

The following describes embodiments of this application in detail with reference to the accompanying drawings.

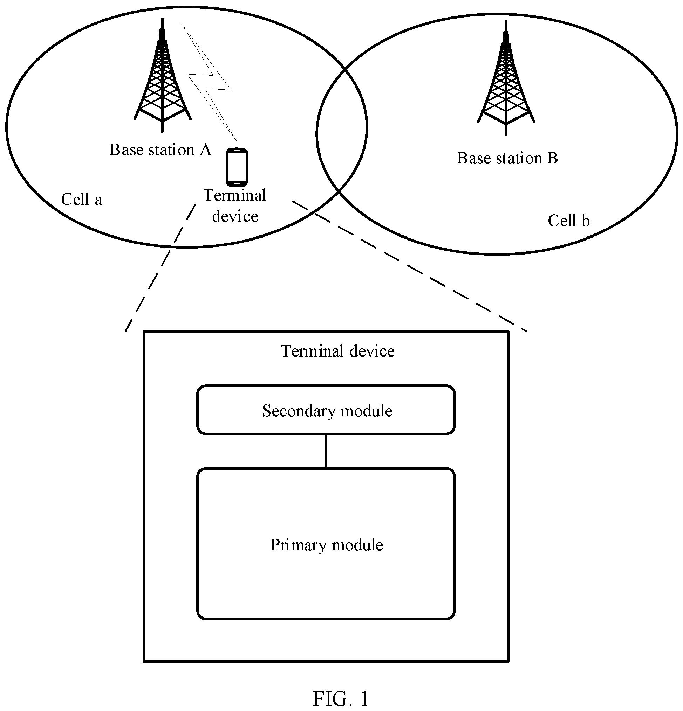

FIG. 1 shows a structure of a mobile communication system to which a method according to an embodiment of this application is applicable. As shown in FIG. 1, the mobile communication system includes a base station and a terminal device.

The base station is an entity that can receive and transmit radio signals on a network side, and is responsible for providing a radio access-related service for a terminal device in a coverage area of the network device, and implementing a physical layer function, resource scheduling and radio resource management, quality of service (Quality of Service, QoS) management, radio access control, and a mobility management function. Through the base station, the terminal device can access a core network and finally connect to a data network, to implement a service of the terminal device.

Each base station is responsible for managing at least one cell. As shown in the figure, a base station A is responsible for managing a cell a, and a base station B is responsible for managing a cell b. Each cell uses a corresponding spectrum resource to provide an access service for the terminal device.

The terminal device is an entity that can receive and transmit radio signals on a user side, and may access a network by accessing a cell managed by a base station. The terminal device may be various devices that provide voice and/or data connectivity for a user, for example, an in-vehicle device, a smartphone, or the like. The terminal device is connected to the base station through a Uu interface, to implement communication between the terminal device and the base station.

A cell that the terminal device currently accesses and that is providing an access service for the terminal device is referred to as a serving cell of the terminal device, and a cell whose location is adjacent to that of the serving cell may be referred to as a neighboring cell. As shown in FIG. 1, the terminal device accesses the cell a managed by the base station A. In this case, the cell a is a serving cell of the terminal device, and the cell b whose location is adjacent to that of the cell a is a neighboring cell of the terminal device.

In the system shown in FIG. 1, to ensure service continuity and communication quality of the terminal device, the terminal device usually performs the following operations.
1. RRM measurement: RRM measurement is cell measurement, and includes serving cell measurement, intra-frequency neighboring cell (which is a neighboring cell that uses a spectrum resource of a same frequency as a serving cell) measurement, and inter-frequency neighboring cell (which is a neighboring cell that uses a spectrum resource of a different frequency from the serving cell) measurement. Because reference signals, namely, synchronization signal blocks (synchronization signal block, SSB), measured by the terminal device are not consecutive in time domain, to avoid that the terminal device continuously searches for and measures an SSB in time domain, a concept of a measurement window, namely, an SSB measurement timing configuration (SSB measurement timing configuration, SMTC) window, is introduced in the mobile communication system. The terminal device may perform inter-frequency neighboring cell measurement in the SMTC window.
   In an idle state and an inactive state, the terminal device may obtain an RRM measurement result (that is, signal quality of reference signals in a serving cell and at least one neighboring cell) through RRM measurement, and perform a cell reselection (reselection) process based on the RRM measurement result to switch a cell on which the terminal device camps. In a connected state, the terminal device may obtain an RRM measurement result through RRM measurement, and perform a cell handover (handover) process based on the RRM measurement result to switch a cell on which the terminal device camps.
2. Paging (paging) listening: A paging mechanism in the mobile communication system is used to trigger the terminal device to update a status (for example, establish an RRC connection to enter a connected state, or return from an inactive state to an idle state), or notify the terminal device of a system message change, and notify the terminal device of arrival of a public warning system (public warning system, PWS) message. The PWS message may include earthquake and tsunami warning system (earthquake and tsunami warning system, ETWS) information and commercial mobile alert system (commercial mobile alert system, CMAS) information.

Currently, the paging mechanism may be implemented by using a paging message (paging message) and/or a short message (short message). Usually, the paging message is used to trigger the terminal device to update a status, and the short message usually carries a system message change indication or a PWS message arrival indication.

Content of the paging message is sent to the terminal device through a physical downlink shared channel (physical downlink shared channel, PDSCH), and the PDSCH is scheduled by using a physical downlink control channel (physical downlink control channel, PDCCH) scrambled by using a paging radio network temporary identifier (paging radio network temporary identifier, P-RNTI). The short message is transmitted by using a PDCCH scrambled by using a P-RNTI.

A process in which the terminal device receives the paging message is as follows: The terminal device in the idle state or the inactive state may autonomously wake up periodically (for example, wake up based on a discontinuous reception (discontinuous reception, DRX) cycle), and after waking up, listen to a PDCCH scrambled by using a P-RNTI; and after detecting the PDCCH scrambled by using the P-RNTI, parse DCI in the PDCCH, to determine a time-frequency resource of a PDSCH based on the DCI. The terminal device receives the PDSCH on the time-frequency resource of the PDSCH, to obtain the paging message in the PDSCH. In a scenario in which the paging message includes an identifier of the terminal device, the terminal device may further determine whether the received paging message includes the identifier of the terminal device; and if the received paging message includes the identifier of the terminal device, the terminal device performs a corresponding operation indicated by the paging message; or if the received paging message does not include the identifier of the terminal device, the terminal device does not perform an operation. The identifier of the terminal device in the paging message may be a serving temporary mobile subscriber identity (serving temporary mobile subscriber identity, S-TMSI) or an inactive-radio network temporary identifier (inactive-radio network temporary identity, I-RNTI).

A process in which the terminal device receives the short message is as follows: The terminal device in the idle state or the inactive state listens to a PDCCH scrambled by using a P-RNTI; and after detecting the PDCCH scrambled by using the P-RNTI, parses the short message in the PDCCH. When the short message includes a system message change indication, the terminal device receives an updated system message in a next system message modification period. When the short message includes a PWS message arrival indication, the terminal device first receives a system information block 1 (system information block 1, SIB1), and then receives the PWS message (that is, ETWS information or CMAS information) on a PDSCH according to an indication of the SIB1.

3. System message receiving: A system message mainly includes a master information block (main information block, MIB) and a plurality of SIBs. The MIB carries basic information, including a downlink bandwidth parameter, a system frame number (system frame number, SFN), a synchronization signal block identifier (synchronization signal block identifier, SSB ID), and the like. The information carried in the MIB relates to scheduling of a SIB 1 message, PDCCH configuration, and PDSCH decoding. After receiving the MIB, the terminal device continues to demodulate and decode the SIB 1 by using a parameter in the MIB. The SIB 1 carries cell access information and scheduling information of another SIB. The SIB 1 further includes paging configuration information.

The MIB is carried on a physical broadcast channel (physical broadcast channel, PBCH), and the SIB information is carried on a PDSCH.

4. Automatic gain control (automatic gain control, AGC) and time-frequency synchronization with a cell

The terminal device performs AGC adjustment and time-frequency offset estimation based on a synchronization signal burst (SS burst, including a plurality of SSBs within specified time) periodically sent by the base station. In an AGC adjustment process, the terminal device calculates power of an SS burst signal collected by an analog-to-digital converter (analog-to-digital convert, ADC), and automatically adjusts gears of amplifiers at all levels on a front-end link based on a value of the power, so that power of a signal input to the ADC is stable within an expected range finally.

Because mobile communication systems such as a new radio (new radio, NR) system and a long term evolution (long term evolution, LTE) system are orthogonal systems, the terminal device may perform time-frequency synchronization with the base station, to improve efficiency of transmission between the terminal device and the base station. During time-frequency synchronization, the terminal device receives an SS burst signal. Because PSSs, SSSs, and DMRSs of PBCHs that are of all SSBs in the SS burst signal are known sequences, time-frequency offset estimation may be performed based on these sequences. Then, the terminal device compensates a subsequently received signal based on an estimated time-frequency offset estimation, to implement time-frequency synchronization.

5. Random access: The terminal device may initiate a random access procedure in the following cases to access a cell managed by the base station.

There are mainly the following two scenarios in which the terminal initiates a random access procedure in the idle state.

Case a: The terminal device enters a coverage area of the cell, and initially accesses the cell through random access.

Case b: An RRC connection of the terminal device is released, and when an RRC connection is reestablished, for example, the terminal device is in the idle state or the inactive state.

The random access procedure includes the following specific steps.
(1) The terminal device determines a common random access preamble resource pool based on PRACH configuration information in a received system message. When initiating random access, the terminal device selects a random access preamble from the common random access preamble resource pool, and sends the selected random access preamble (also referred to as a message 1 (message 1, msg1)) to the base station.
   After sending the random access preamble, the terminal device starts a random access response (random access response, RAR) time window (window), and listens, within the RAR time window, to an RAR sent by the base station. If no RAR is received within the RAR time window, it indicates that the current random access fails, and the terminal device re-initiates a random access procedure.
(2) After receiving the random access preamble from the terminal device, the base station sends an RAR (also referred to as a message 2 (message 2, msg2)) to the terminal device.
(3) After receiving, within the RAR time window, the RAR fed back by the base station, the terminal device sends, to the base station, a scheduled transmission (scheduled transmission) message (also referred to as a message 3 (message 3, msg3)) that carries an identifier of the terminal device.
   The identifier of the terminal device may be an identifier allocated by a core network device to the terminal device, for example, a cell radio network temporary identifier (cell radio network temporary identifier, C-RNTI) or a UE identifier (identifier, ID).
(4) After receiving a scheduled transmission message sent by at least one terminal device (a contention conflict exists), the base station sends a contention resolution (contention resolution) message (also referred to as a message 4 (message 4, msg4)) to one terminal device (a current terminal device is used as an example) in the terminal device. The contention resolution message carries an identifier of the terminal device. The terminal device is a terminal device that is specified by the base station and that wins in the contention conflict of current random access.

If a terminal device receives a contention resolution message that carries an identifier of the terminal device, it indicates that current random access of the terminal device succeeds. If a terminal device does not receive a contention resolution message that carries an identifier of the terminal device, it indicates that current random access fails, and a new random access procedure may be re-initiated.

As shown in FIG. 1, to reduce power consumption of the terminal device, the terminal device in this system may use a working mode based on a primary module and a secondary module. The following describes functions of the primary module and the secondary module in the terminal device.

The primary module is a conventional circuit module in the terminal device, is configured to implement various operations and functions of the terminal device, and is also referred to as a primary circuit module or a primary circuit. Because the primary module can implement various operations and functions of the terminal device, power consumption of the primary module is high in a working state, and is usually at an mW magnitude. After the terminal device enters the idle state or the inactive state, the primary module enters a power saving state (for example, a disabled state or an extremely low power consumption state). In this case, the primary module does not perform operations such as paging listening, RRM measurement, and system message receiving, so that power consumption caused by performing the foregoing operations by the terminal device can be effectively reduced. Only when the primary module is woken up and enters a working state, the primary module can restore a function of the primary module, and can perform operations such as paging listening, RRM, and system message receiving.

Energy consumption of the secondary module is low in a working state, and is usually at a µW magnitude or even an nW magnitude. A signal receiver is disposed inside the secondary module, and can receive a signal from the base station. After the primary module enters the power saving state, the secondary module enters the working state, and listens to a wake-up signal (wake-up signal, WUS) of the base station. After receiving the WUS, the secondary module may wake up the primary module through a connection to the primary module, so that the primary module enters a working state and restores a function of the primary module. The secondary module may also be referred to as a wake-up receiver (wake-up receiver, WUR), a secondary circuit module, or a secondary circuit. Optionally, the WUS may be an excitation signal such as ASK. Optionally, after waking up the primary module, the secondary module may switch from the working state to a power saving state, or the secondary module is always in the working state. This is not limited in embodiments of this application.

It should be noted that a representation form of the secondary module is not limited in embodiments of this application. The secondary module may be an independent receiver, or may be an independent module in the terminal device, or may be a module that can implement a WUR function through separate enabling and disabling from the primary module.

Based on the foregoing structure including the primary module and the secondary module, when entering the idle state or the inactive state, the terminal device may enable the secondary module, and set the primary module to entering the power saving state. After receiving the WUS from the base station, the secondary module wakes up the primary module, and the primary module enters the working state, so that the primary module can perform operations such as paging listening, RRM measurement, and system message receiving, and then access a network to implement a service of the terminal device, thereby finally ensuring a function of the terminal device.

It should be further noted that the mobile communication system shown in FIG. 1 is used as an example, and does not constitute a limitation on a mobile communication system to which a method provided in embodiments of this application is applicable. In conclusion, embodiments of this application may be further applied to communication systems of various types and standards, for example, mobile communication systems such as a 5th generation (The 5th Generation, 5G) communication system, a 6th generation (The 6th Generation, 6G) communication system, a future evolved communication system of another standard, a long term evolution (Long Term Evolution, LTE) communication system, and a long term evolution-vehicle (LTE-vehicle, LTE-V) system.

Currently, a terminal device in an idle state or an inactive state implements mobility management of the terminal device mainly through RRM measurement. However, for a terminal device that uses a working mode based on a primary module and a secondary module, in the two states, the primary module enters a power saving state, and cannot perform RRM measurement. Therefore, the terminal device cannot determine, based on an RRM measurement result, whether the terminal device is still in a serving cell on which the terminal device previously camps, and cannot perform cell reselection based on the RRM measurement result. This reduces mobility management performance of the terminal device. As the terminal device moves, the terminal device may have left the cell on which the terminal device previously camps, but if the terminal device still listens to paging or initiates random access in the original camping cell, a communication failure probability and unnecessary power consumption are increased.

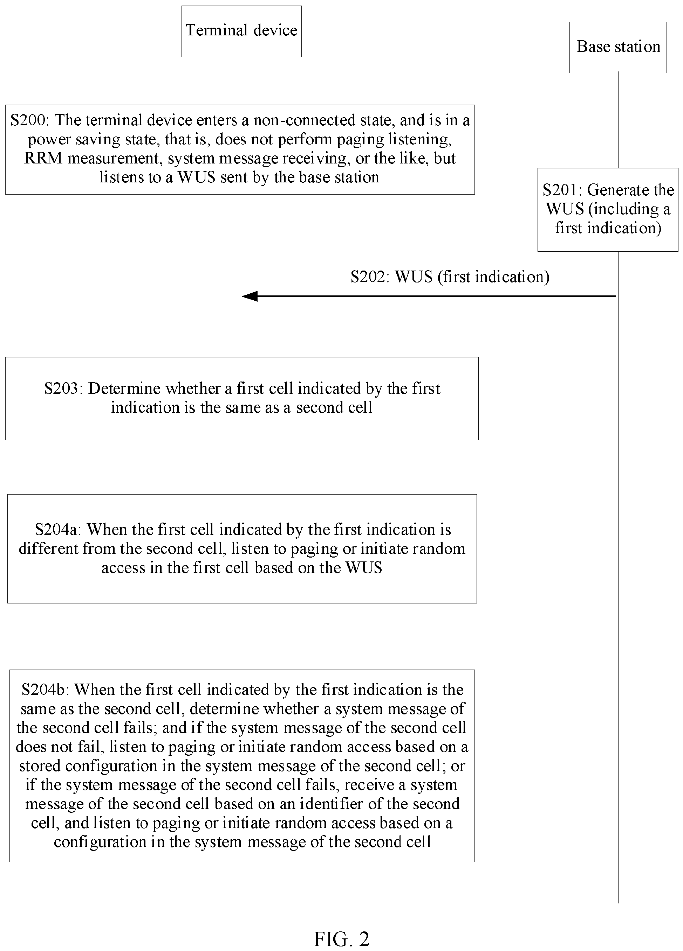

To ensure a mobility management function of a terminal device, and further reduce a communication failure probability and unnecessary power consumption of the terminal device, an embodiment of this application provides a communication method. The method is applicable to the mobile communication system shown in FIG. 1. The following describes in detail the method provided in this embodiment of this application with reference to a flowchart shown in FIG. 2. Optionally, the terminal device in this embodiment of this application may use a working mode based on a primary module and a secondary module, as shown by the terminal device in FIG. 1.

S200: The terminal device enters a non-connected state (which may be but is not limited to an idle state or an inactive state), and the terminal device is in a power saving state. To be specific, the terminal device may not perform paging listening, RRM measurement, system message receiving, or the like, but listen to a WUS sent by a base station. After detecting the WUS, the terminal device wakes up from the power saving state according to an indication of the WUS, listens to paging or initiates random access, and may restore functions of RRM measurement and system message receiving.

When the terminal device uses the working mode based on the primary module and the secondary module, the primary module of the terminal device that enters the non-connected state is in a power saving state, the primary module does not perform operations such as paging listening, RRM measurement, and system message receiving, and the secondary module is in a working state. In the working state, the secondary module may listen to the WUS of the base station.

S201: The base station generates the WUS. The WUS includes a first indication, the first indication indicates a first cell managed by the base station, and the WUS indicates a terminal device located in a coverage area of the first cell to listen to paging or initiate random access.

In an implementation, the first indication may be an identifier of the first cell.

In another implementation, the first indication may be determined based on an identifier of the first cell, or may be information that identifies the first cell in a tracking area (that is, a tracking area to which the first cell belongs).

In this implementation, the base station may determine the first indication by using the following step.

The base station determines the first indication based on a first mapping relationship and the identifier of the first cell, where the first mapping relationship is a correspondence between the first indication and the identifier of the first cell.

Optionally, the first mapping relationship may be preconfigured in the base station, for example, configured before delivery of the base station (or configured by a network management system of the base station for the base station), or may be specified in a communication protocol, or may be preconfigured by a core network. This is not limited in this application. For example, an AMF in the core network may configure the first mapping relationship for the base station through an S1 interface or an NG interface.

It should be noted that, in this embodiment of this application, an identifier of each cell may be a cell global identity (cell global identity, CGI) or a physical cell identity (Physical cell identity, PCI) of the cell.

Optionally, in this embodiment of this application, an indication (the first indication or a second indication) indicating a cell may also be referred to as feature information of the cell, and may be a local identifier (local ID) of the cell in a tracking area to which the cell belongs, or a cell index (cell index). A local identifier of any cell is information that uniquely identifies the cell in a tracking area, and may include an identifier of the tracking area and a sequence number of the cell in the tracking area. An index of any cell may be information that can uniquely identify the cell and that is obtained by the core network or the base station through calculation based on an identifier of the cell by using a specified rule (for example, a hash algorithm). Currently, an identifier (for example, a CGI or a PCI) of a cell occupies a large quantity of bits, and when an indication of the cell is a local ID or a cell index, a quantity of bits of the indication is small. Therefore, an amount of information carried in the WUS can be reduced, thereby reducing overheads for transmitting the WUS.

Because the WUS carries the first indication, mobility management of the terminal device can be implemented by using the WUS. To be specific, if any terminal device receives the WUS, it indicates that the terminal device is currently in the coverage area of the first cell indicated by the first indication.

S202: The base station sends the WUS. The terminal device receives, in the non-connected state, the WUS from the base station.

In this embodiment of this application, the base station may send the WUS in the following manners.

Manner 1: The base station may send the WUS in a broadcast or multicast manner. In the manner 1, the base station may simultaneously wake up a plurality of terminal devices or a group of terminal devices located in the coverage area of the first cell, thereby improving wake-up efficiency of the base station.

Manner 2: The base station may send the WUS to a specific terminal device. In the manner 2, the base station may wake up the terminal device in a targeted manner, thereby improving flexibility of waking up the terminal device by the base station.

In an implementation of the manner 2, the WUS further includes indication information indicating a terminal device. In this way, after receiving the WUS, the terminal device may determine whether the terminal device is the terminal device indicated by the indication information in the WUS, and perform a subsequent step when the terminal device is the terminal device indicated by the indication information in the WUS.

Optionally, the indication information may be an identifier of the terminal device. In this way, the base station may send the WUS to the terminal device based on the identifier of the terminal device. The identifier of the terminal device may be obtained by the base station from a paging signal used by the core network to page the terminal device. When paging any terminal device, the core network sends a paging message (paging message) to all cells in a tracking area in which the terminal device is located. The paging message includes an identifier of the terminal device, that is, an S-TMSI of the terminal device. After receiving the paging message sent by the core network, a base station located in the tracking area obtains the S-TMSI of the terminal device from the paging message through parsing, and includes information corresponding to the S-TMSI in a WUS signal for sending.

Optionally, the indication information may be obtained by the base station through calculation based on the identifier of the terminal device by using a specified rule. Therefore, the terminal device that receives the WUS may first determine an identifier of a terminal device based on an indication in the WUS by using a specified rule (which is the same as the rule used on a base station side), and then compare the identifier of the terminal device with the determined identifier of the terminal device. Only when the two identifiers are the same, the terminal device wakes up based on the WUS. In this implementation, the identifier of the terminal device may be an S-TMSI or an I-RNTI of the terminal device.

In another implementation of the manner 2, the WUS may be scrambled based on an identifier of the terminal device (that is, the base station scrambles, based on the identifier of the terminal device, a PDCCH that carries the WUS). Therefore, the terminal device that receives the WUS may descramble the WUS based on the identifier of the terminal device, and the terminal device wakes up based on the WUS only when descrambling succeeds. In this implementation, the identifier of the terminal device may be an S-TMSI or an I-RNTI of the terminal device.

It should be noted that, in the foregoing two implementations, the identifier of the terminal device may be information that uniquely identifies the terminal device in the tracking area in which the terminal device is located, and is not limited to the S-TMSI or the I-RNTI.

S203: The terminal device determines whether the first cell indicated by the first indication is the same as a second cell, where the second cell is a cell on which the terminal device camps before the terminal device receives the WUS.

It may be determined, by determining whether the first cell indicated by the first indication is the same as the second cell, whether the terminal device in the non-connected state has moved out of a coverage area of the second cell. When the first cell is different from the second cell, it indicates that the terminal device has moved out of the coverage area of the second cell; or when the first cell is the same as the second cell, it indicates that the terminal device is still in the coverage area of the second cell. In this way, mobility management of the terminal device can be implemented by including the first indication in the WUS.

In this embodiment of this application, the terminal device may determine, in the following implementations, whether the first cell indicated by the first indication is the same as the second cell, but this is not limited.

In a first implementation, the terminal device may determine the identifier of the first cell based on the first indication; and then the terminal device determines whether the identifier of the first cell is the same as a stored identifier of the second cell. When the identifiers of the two cells are the same, the two cells are the same; or when the identifiers of the two cells are different, the two cells are different.

Optionally, when the first indication is the identifier of the first cell, the terminal device may directly determine the identifier of the first cell.

Optionally, when the first indication is determined by the base station based on the identifier of the first cell and the first mapping relationship, the terminal device may alternatively determine the identifier of the first cell based on the stored first mapping relationship and the first indication. The first mapping relationship stored by the terminal device should be the same as a mapping relationship stored by the base station. The first mapping relationship may be preconfigured, for example, configured before delivery of the terminal device (or configured through online software upgrade after delivery), or may be specified in a communication protocol, or may be preconfigured by the base station (for example, by using RRC signaling) or the core network (by using non-access stratum signaling). This is not limited in this application. For example, when the first mapping relationship is configured by a core network device (for example, an AMF), before S203 is performed, the terminal device may further receive the first mapping relationship from the core network device.

In a second implementation, the terminal device may determine, based on a stored identifier of the second cell, a second indication indicating the second cell, and then the terminal device determines whether the first indication is the same as the second indication. When the two indications are the same, the two cells are the same; or when the two indications are different, the two cells are different.

Same as the determining manner of the first indication, the terminal device may determine the second indication in the following manners.

When the first indication is the identifier of the first cell, the terminal device may directly determine that the identifier of the second cell is the second indication.

When the first indication is determined by the base station based on the identifier of the first cell and the first mapping relationship, the terminal device may alternatively determine the second indication based on a stored second mapping relationship and the stored identifier of the second cell. Similar to the first mapping relationship, the second mapping relationship is a correspondence between the second indication and the identifier of the second cell. The second mapping relationship may be preconfigured, for example, configured before delivery of the terminal device (or configured through online software upgrade after delivery), or may be specified in a communication protocol, or may be preconfigured by the base station or the core network. This is not limited in this application. For example, when the second mapping relationship may be configured by a core network device (for example, an AMF), before S203 is performed, the terminal device may further receive the second mapping relationship from the core network device.

Optionally, the first mapping relationship and the second mapping relationship may be represented by using a mapping rule between a cell indication (an indication indicating a cell, for example, the first indication or the second indication in this embodiment of this application) and a cell identifier. When knowing an identifier of any cell, the terminal device may obtain, based on the mapping rule, a cell indication indicating the cell. When knowing any cell indication, the terminal device may obtain a cell identifier based on the mapping rule.

It should be further noted that, when the base station performs S202, if the base station sends the WUS to the specific terminal device in the manner 2, before performing S203, the terminal device may further determine, based on the identifier of the terminal device in any one of the following implementations, whether the terminal device is a wake-up object of the base station.

In an implementation, the WUS further includes indication information indicating the terminal device. In this way, after receiving the WUS, the terminal device may determine whether the terminal device is the terminal device indicated by the indication information in the WUS, and perform a subsequent step when the terminal device is the terminal device indicated by the indication information in the WUS.

For example, if the indication information is the identifier of the terminal device, after receiving the WUS, the terminal device may further determine whether the identifier of the terminal device included in the WUS is the identifier of the terminal device; and may perform step S203 if the identifier of the terminal device included in the WUS is the identifier of the terminal device (indicating that the WUS is sent to the terminal device); or does not perform step S203 if the identifier of the terminal device included in the WUS is not the identifier of the terminal device (indicating that the WUS is not sent to the terminal device).

For another example, when the indication information is obtained by the base station through calculation based on the identifier of the terminal device by using a specified rule, after receiving the WUS, the terminal device may first determine an identifier of a terminal device based on an indication in the WUS by using the specified rule, and then compare the identifier of the terminal device with the determined identifier of the terminal device. If the two identifiers are the same (indicating that the WUS is sent to the terminal device), the terminal device may perform step S203; or if the two identifiers are different (indicating that the WUS is not sent to the terminal device), the terminal device does not perform step S203.

In another implementation, when the WUS is scrambled by the base station based on the identifier of the terminal device, after receiving the WUS, the terminal device may further descramble the WUS based on the identifier of the terminal device. If descrambling succeeds (indicating that the WUS is sent to the terminal device), the terminal device may perform step S203; or if descrambling fails (indicating that the WUS is not sent to the terminal device), the terminal device does not perform step S203.

S204a: When the first cell indicated by the first indication is different from the second cell, the terminal device listens to paging or initiates random access in the first cell based on the WUS.

In this embodiment of this application, the terminal device may listen to paging or initiate random access in the first cell based on the WUS by using the following steps.

a1: The terminal device determines the identifier of the first cell based on the first indication.

Optionally, the terminal device may perform step a1 in the following two manners, but this is not limited.

Manner 1: When the first indication is determined by the base station based on the identifier of the first cell and the first mapping relationship, the terminal device determines the identifier of the first cell based on the stored first mapping relationship and the first indication; or when the first indication is the identifier of the first cell, the terminal device may directly determine the identifier of the first cell.

That is, when the terminal device performs S203 in the first implementation, because the terminal device has determined the identifier of the first cell in the process, the terminal device may directly reuse the step of determining the identifier of the first cell in the process, to determine the identifier of the first cell.

Manner 2: Each time when the terminal device camps on a cell, if the terminal device stores information about the cell (including an identifier of the cell and an indication indicating the cell), the terminal device may determine the identifier of the first cell when information about at least one cell on which the terminal device historically camps includes information about the first cell (including the information about the first cell and the first indication).

In the manner 2, the terminal device may search for the first indication from the information about the at least one cell on which the terminal device historically camps, and when the information about the first cell including the first indication is found, the terminal device may determine the identifier of the first cell included in the information about the first cell.

a2: The terminal device receives a system message (which includes a SIB1, and may further include another SIB) of the first cell based on the identifier of the first cell, and listens to paging or initiates random access based on a configuration in the system message of the first cell.

In an implementation, the terminal device may receive the system message of the first cell by using the following steps.

The terminal device generates a corresponding scrambling code based on the identifier of the first cell, and after descrambling the system message that is in the first cell and that is scrambled by using the scrambling code, performs demodulation and decoding, to obtain the system message of the first cell.

Optionally, before receiving the system message of the first cell, the terminal device may further perform AGC for the first cell and perform time-frequency synchronization with the first cell based on the identifier of the first cell by using the following steps.

The terminal device generates, based on the identifier of the first cell, a PSS sequence and an SSS sequence that correspond to the first cell, receives a PSS and an SSS in the first cell based on the generated PSS sequence and SSS sequence of the first cell, and determines receiving power and a level based on the received PSS and SSS, to adjust a receiving parameter of a front-end link and perform AGC. In addition, the terminal device may further estimate a time-frequency offset of the terminal device relative to the base station based on the received PSS and SSS, and the PSS sequence and the SSS sequence that correspond to the first cell, so that time and a frequency of the terminal device can be adjusted, to implement time-frequency synchronization.

It should be noted that, regardless of a specific manner in which the terminal device determines the identifier of the first cell in step a1, a case in which the identifier of the first cell is not obtained may occur. If the terminal device fails to determine the identifier of the first cell based on the first indication (for example, when the core network device does not set the first mapping relationship for the terminal device, or the terminal device has not camped on the first cell (for example, the terminal device moves across tracking areas in the non-connected state)), the terminal device camps on a third cell by searching for a network again, receives a system message of the third cell based on an identifier of the third cell, and listens to paging or initiates random access based on a configuration in the system message of the third cell.

In an implementation, the terminal device may receive the system message of the third cell by using the following steps. The terminal device generates a corresponding scrambling code based on the identifier of the third cell, and after descrambling the system message that is in the third cell and that is scrambled by using the scrambling code, performs demodulation and decoding, to obtain the system message of the third cell.

Optionally, before receiving the system message of the third cell, the terminal device may further perform AGC for the third cell and perform time-frequency synchronization with the third cell based on the identifier of the third cell by using the following steps.

The terminal device generates, based on the identifier of the third cell, a PSS sequence and an SSS sequence that correspond to the third cell, receives a PSS and an SSS in the third cell based on the generated PSS sequence and SSS sequence of the third cell, and determines receiving power and a level based on the received PSS and SSS, to adjust a receiving parameter of a front-end link and perform AGC. In addition, the terminal device may further estimate a time-frequency offset of the terminal device relative to the base station based on the received PSS and SSS, and the PSS sequence and the SSS sequence that correspond to the third cell, so that time and a frequency of the terminal device can be adjusted, to implement time-frequency synchronization.

It should be noted that this application imposes no limitation on the first cell, the second cell, and the third cell. The three cells may be different from each other, or the third cell is the same as the first cell or the second cell.

S204b: When the first cell indicated by the first indication is the same as the second cell, the terminal device determines whether a system message (which includes a SIB1, and optionally, may further include another SIB) of the second cell fails; and if the system message of the second cell does not fail, listens to paging or initiates random access based on a stored configuration in the system message of the second cell; or if the system message of the second cell fails, receives a system message of the second cell based on the identifier of the second cell, and listens to paging or initiates random access based on a configuration in the system message of the second cell. Because a cell may transmit a plurality of types of system messages, if it is determined that a system message of a specific type fails, a system message of this type may be received, thereby ensuring that a configuration in the system message of this type is valid when the system message of this type is used.

In an implementation, the terminal device may receive the system message of the second cell by using the following steps.

The terminal device generates a corresponding scrambling code based on the stored identifier of the second cell, and after descrambling the system message that is in the second cell and that is scrambled by using the scrambling code, performs demodulation and decoding, to obtain the system message of the second cell.

In an implementation, the terminal device may determine, based on valid duration of the system message of the second cell, whether the system message of the second cell fails. Valid duration (for example, 3 hours or 4 hours) for the terminal device to store a system message is specified in the mobile communication system. When the terminal device does not receive any notification of a system message change, whether a system message fails is determined based on valid duration of the system message.

In this implementation, when receiving the system message of the second cell (for example, a SIB 1 of the second cell), the terminal device may start a valid timer of the system message (a value of the valid timer is specified valid duration of the system message) and start timing. When the valid timer expires, the terminal device may determine that the system message fails.

Optionally, similar to a2 in S204a, before receiving the system message of the second cell, the terminal device may further perform AGC for the second cell and perform time-frequency synchronization with the second cell based on the identifier of the second cell. A specific process is as follows:

The terminal device generates, based on the identifier of the second cell, a PSS sequence and an SSS sequence that correspond to the second cell, receives a PSS and an SSS in the second cell based on the generated PSS sequence and SSS sequence of the second cell, and determines receiving power and a level based on the received PSS and SSS, to adjust a receiving parameter of a front-end link and perform AGC. In addition, the terminal device may further estimate a time-frequency offset of the terminal device relative to the base station based on the received PSS and SSS, and the PSS sequence and the SSS sequence that correspond to the second cell, so that time and a frequency of the terminal device can be adjusted, to implement time-frequency synchronization.

In conclusion, embodiments of this application provide a communication method. In the method, a base station may use a WUS to carry an indication indicating a cell managed by the base station. A terminal device in a non-connected state receives the WUS, and this indicates that the terminal device is in a coverage area of the cell indicated by the indication. Then, the terminal device may listen to paging or initiate random access in the cell. In this manner, the terminal device in the non-connected state may determine, by using the WUS, whether the terminal device is still in a coverage area of a cell on which the terminal device previously camps, to implement mobility management. Further, after receiving the WUS, the terminal device in the coverage area of the cell indicated by the indication included in the WUS may listen to paging or initiate random access in the cell. This can increase a probability of successfully detecting paging or initiating random access, and avoid a case in which the terminal device may have left a cell on which the terminal device previously camps but the terminal device still performs paging or initiates random access in the original camping cell, thereby increasing a communication success probability of the terminal device and reducing unnecessary power consumption.

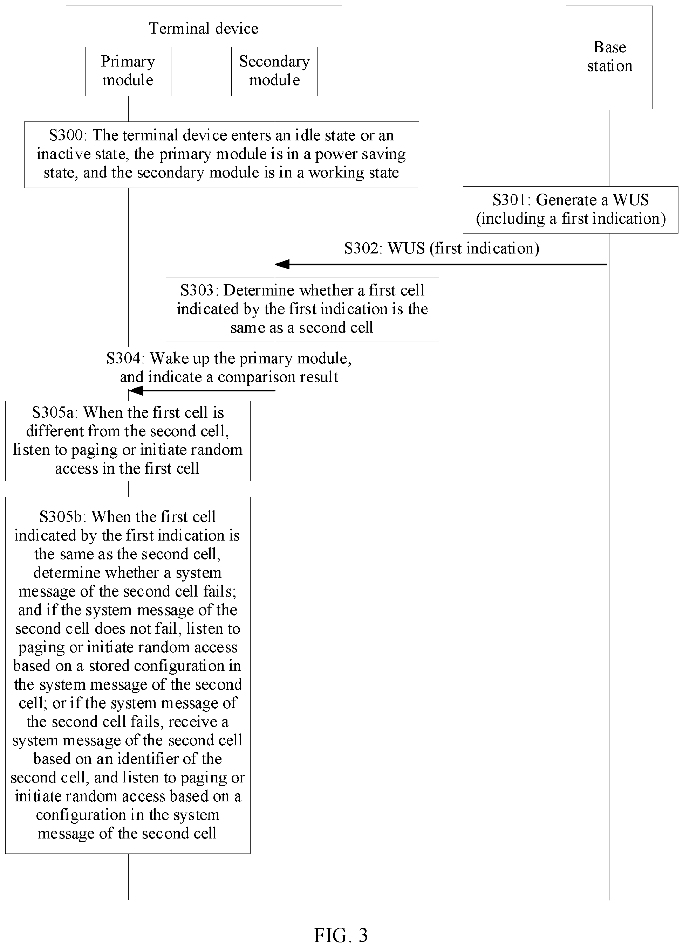

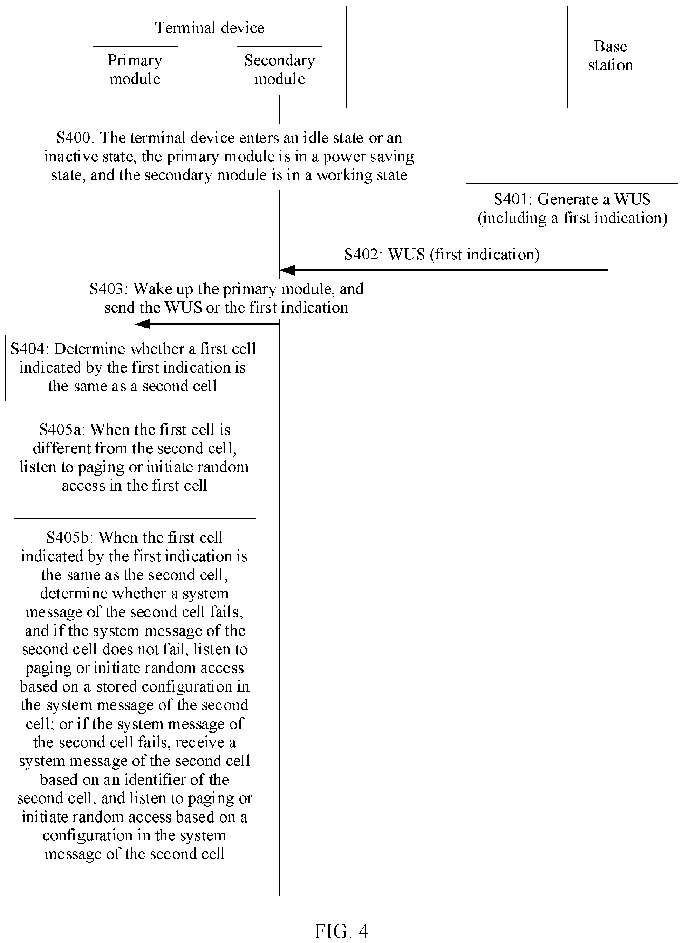

Based on the embodiment shown in FIG. 2, this application further provides some embodiments of the communication method. These embodiments are also applicable to the mobile communication system shown in FIG. 1. A terminal device in embodiments of this application uses a working mode based on a primary module and a secondary module, as shown by the terminal device in FIG. 1. Based on a function of the secondary module in a non-connected state, this application provides two embodiments in FIG. 3 and FIG. 4. The following describes the embodiments with reference to FIG. 3 or FIG. 4. It should be noted that the embodiment shown in FIG. 3 or FIG. 4 is an example, and does not constitute a limitation. It should be understood that performing some steps in the figure, adjusting a sequence of the steps, or combining some steps to perform a specific embodiment falls within the protection scope of this application.

Embodiment 1: The secondary module not only has a function of receiving a WUS and a function of waking up the primary module, but also has a specific processing and calculation function, and can compare whether a first cell indicated by a first indication in the WUS is the same as a second cell. The following describes this embodiment with reference to a flowchart shown in FIG. 3.

S300: The terminal device enters a non-connected state (which may be but is not limited to an idle state or an inactive state), the primary module is in a power saving state, and the primary module does not perform operations such as paging listening, RRM measurement, and system message receiving. The secondary module is in a working state, and the secondary module may listen to a WUS of a base station.

S301: The base station generates the WUS. The WUS includes a first indication, the first indication indicates a first cell managed by the base station, and the WUS indicates a terminal device located in a coverage area of the first cell to listen to paging or initiate random access.

S302: The base station sends the WUS. The secondary module in the working state in the terminal device receives the WUS from the base station.

Steps S301 and S302 in this embodiment are the same as steps S201 and S302 in the embodiment shown in FIG. 2. Therefore, mutual reference may be made to the same steps, and details are not described herein again.

It should be noted that, when the base station performs S302, if the base station sends the WUS to a specific terminal device in the manner 2, when receiving the WUS, the secondary module may further determine whether the terminal device is a wake-up object of the base station. For a specific process, refer to the specific description in S203 in the implementation shown in FIG. 2. Details are not described herein again.

S303: After the secondary module in the working state receives the WUS sent by the base station, the secondary module parses the WUS to obtain the first indication included in the WUS. The secondary module may determine, based on the first indication, whether the first cell indicated by the first indication is the same as the second cell. The second cell is a cell on which the terminal device camps before the terminal device receives the WUS.

Similar to the step in S203 in the embodiment shown in FIG. 2, the secondary module may determine, in the following implementations, whether the first cell indicated by the first indication is the same as the second cell, but this is not limited.

In a first implementation, the secondary module may determine the identifier of the first cell based on the first indication; and then the secondary module determines whether the identifier of the first cell is the same as a stored identifier of the second cell. When the identifiers of the two cells are the same, the two cells are the same; or when the identifiers of the two cells are different, the two cells are different.

Optionally, when the first indication is the identifier of the first cell, the secondary module may directly determine the identifier of the first cell.

Optionally, when the first indication is determined by the base station based on the identifier of the first cell and the first mapping relationship, the secondary module may alternatively determine the identifier of the first cell based on the stored first mapping relationship and the first indication. The first mapping relationship stored by the secondary module should be the same as a mapping relationship stored by the base station.

In a manner, the first mapping relationship may be preconfigured, for example, configured in the secondary module before delivery of the terminal device (or configured through online software upgrade after delivery), or may be specified in a communication protocol, or may be preconfigured by the base station or the core network (for example, an AMF) in the secondary module. In another manner, the first mapping relationship may alternatively be configured by the primary module in the secondary module, and the first mapping relationship in the primary module may be configured in any one of the foregoing two manners.

In a second implementation, the secondary module may determine, based on a stored identifier of the second cell, a second indication indicating the second cell; or the primary module of the terminal device may determine, in a working state, the second indication based on the stored identifier of the second cell, and send the second indication to the secondary module for storage. Then, the secondary module determines whether the first indication is the same as the second indication. When the two indications are the same, the two cells are the same; or when the two indications are different, the two cells are different. The identifier of the second cell may be configured for the secondary module before the primary module enters the power saving state.

Same as the determining manner of the first indication, the secondary module or the primary module may determine the second indication in the following manners.

When the first indication is the identifier of the first cell, it is directly determined that the identifier of the second cell is the second indication.

When the first indication is determined by the base station based on the identifier of the first cell and the first mapping relationship, the second indication is determined based on a stored second mapping relationship and the stored identifier of the second cell. Similar to the first mapping relationship, the second mapping relationship is a correspondence between the second indication and the identifier of the second cell. For a manner of obtaining the second mapping relationship, refer to the description in the first implementation. Details are not described herein again.

S304: The secondary module wakes up the primary module based on the WUS, and notifies the primary module of a comparison result obtained in S303. The primary module enters a working state after being woken up.

Optionally, waking up the primary module and indicating the comparison result are two independent steps, that is, the secondary module may wake up the primary module by sending a first message to the primary module, and then send a second message to the primary module to indicate the comparison result. Optionally, an indication field in the second message indicates the comparison result.

Optionally, waking up the primary module and indicating the comparison result may alternatively be one step, that is, the secondary module may wake up the primary module by sending a first message to the primary module. An indication field in the first message indicates the comparison result.

For example, the indication field that is in the first message or the second message and that indicates the comparison result may include a 1-bit indication bit. When a value of the indication bit is "0", it indicates that the first cell indicated by the first indication included in the WUS is different from the second cell; or when a value of the indication bit is " 1", it indicates that the first cell indicated by the first indication included in the WUS is the same as the second cell.

In an implementation, if the secondary module determines, in the first implementation in S303, that the first cell indicated by the first indication is different from the second cell, when performing S304, the secondary module may further send the identifier of the first cell determined in S303 to the primary module, so that the primary module may directly perform S305a based on the identifier of the first cell. In this manner, the primary module in the terminal device may directly obtain the identifier of the first cell after being woken up, so that the step of determining the identifier of the first cell by using the first indication does not need to be performed, thereby shortening time for listening to paging or initiating random access in the first cell.

In another implementation, when performing S304, the secondary module may further send the WUS or the first indication to the primary module, so that the primary module may determine the identifier of the first cell based on the first indication, to directly perform S305a based on the identifier of the first cell.

S305a: When the primary module determines, based on the comparing result indicated by the secondary module, that the first cell indicated by the first indication in the received WUS is different from the second cell, the primary module listens to paging or initiates random access in the first cell.

In an implementation, when the primary module further receives, in S304, the identifier of the first cell sent by the secondary module, the primary module directly listens to paging or initiates random access in the first cell based on the received identifier of the first cell.

In another implementation, when the primary module further receives, in S304, the WUS or the first indication sent by the secondary module, the primary module may further first determine the identifier of the first cell based on the first indication, and then listen to paging or initiate random access in the first cell based on the determined identifier of the first cell. For a process in which the primary module determines the identifier of the first cell based on the first indication, refer to the description in a1 in S204a in the embodiment shown in FIG. 2. Details are not described herein again. It should be noted that, if the primary module fails to obtain the identifier of the first cell based on the first indication, the primary module may further camp on a third cell by searching for a network again, receive a system message of the third cell based on an identifier of the third cell, and listen to paging or initiate random access based on a configuration in the system message of the third cell.

In this step, the primary module may listen to paging or initiate random access in the first cell based on the identifier of the first cell by using the following steps.

The primary module receives a system message (which includes a SIB 1, and optionally, may further include another SIB) of the first cell based on the identifier of the first cell, and listens to paging or initiates random access based on a configuration in the system message of the cell.

Optionally, before receiving the system message of the first cell, the primary module may further perform AGC for the first cell and perform time-frequency synchronization with the first cell based on the identifier of the first cell.

For a process in which the primary module receives the system message of the first cell, performs AGC for the first cell, and performs time-frequency synchronization with the first cell, refer to the description in a2 in S204a in the embodiment shown in FIG. 2. Details are not described herein again.

S305b: When the primary module determines, based on the comparison result indicated by the secondary module, that the first cell indicated by the first indication in the received WUS is the same as the second cell, the primary module determines whether a system message (which includes a SIB 1, and optionally, may further include another SIB) of the second cell fails; and if the system message of the second cell does not fail, listens to paging or initiates random access based on a stored configuration in the system message of the second cell; or if the system message of the second cell fails, receives a system message of the second cell based on the identifier of the second cell, and listens to paging or initiates random access based on a configuration in the system message of the second cell.

For a specific process of performing S305b by the primary module, refer to the specific description in S204b in the embodiment shown in FIG. 2. Details are not described herein again.

Embodiment 2: The secondary module has a function of receiving a WUS and a function of waking up the primary module; or the secondary module not only has a function of receiving a WUS and a function of waking up the primary module, but also has a simple signal parsing function, and may obtain a first indication by parsing the WUS.

S400 to S402 are the same as S300 to S302 in Embodiment 1 shown in FIG. 3, and details are not described herein again.

S403: After receiving the WUS sent by the base station, the secondary module in the working state wakes up the primary module based on the WUS, and sends the WUS to the primary module; or after receiving the WUS sent by the base station, the secondary module in the working state parses the WUS to obtain the first indication included in the WUS, wakes up the primary module based on the WUS, and sends the first indication obtained through parsing to the primary module. The primary module enters a working state after being woken up.

Optionally, in S403, waking up the primary module and sending the WUS or the first indication may be two independent steps, that is, the secondary module may wake up the primary module by sending a first message to the primary module, and then send, to the primary module, a second message that carries the WUS or the first indication.

Optionally, in S403, waking up the primary module and sending the WUS or the first indication may be one step, that is, the secondary module may wake up the primary module by sending a first message to the primary module. The first message further includes the WUS or the first indication.

S404: When receiving the WUS sent by the secondary module, the primary module parses the WUS to obtain the first indication; and determines, based on the first indication obtained through parsing or the first indication received from the secondary module, whether a first cell indicated by the first indication is the same as a second cell. The second cell is a cell on which the terminal device camps before the terminal device receives the WUS.

The primary module may determine, in the manner described in S203 in the embodiment shown in FIG. 2 or S303 in the embodiment shown in FIG. 3, whether the first cell indicated by the first indication is the same as the second cell. For a specific process, reference may be made to each other. Details are not described herein again.

S405a: When a comparison result obtained by the primary module by performing S404 is that the first cell is different from the second cell, the primary module listens to paging or initiates random access in the first cell.

This step is the same as S305a in the embodiment shown in FIG. 3, and details are not described herein again.

S405b: When a comparison result obtained by the primary module by performing S404 is that the first cell is the same as the second cell, the primary module determines whether a system message (which includes a SIB1, and optionally, may further include another SIB) of the second cell fails; and if the system message of the second cell does not fail, listens to paging or initiates random access based on a stored configuration in the system message of the second cell; or if the system message of the second cell fails, receives a system message of the second cell based on the identifier of the second cell, and listens to paging or initiates random access based on a configuration in the system message of the second cell. Because a cell may transmit a plurality of types of system messages, if it is determined that a system message of a specific type fails, a system message of this type may be received, thereby ensuring that a configuration in the system message of this type is valid when the system message of this type is used.

For a specific process of performing S405b by the primary module, refer to the specific description in S204b in the embodiment shown in FIG. 2 or S305b in the embodiment shown in FIG. 3. Details are not described herein again.

It should be noted that, in Embodiment 1 or Embodiment 2, when the first cell indicated by the first indication is different from the second cell, if the primary module fails to determine the identifier of the first cell based on the first indication, the primary module may camp on a third cell by performing searching again, receive a system message of the third cell based on an identifier of the third cell, and listen to paging or initiate random access based on a configuration in the system message of the third cell.

A main objective of using the working mode based on the primary module and the secondary module by the terminal device in the mobile communication system is to reduce power consumption of the terminal device in the non-connected state. However, when the terminal device is in the non-connected state, the primary module enters a power saving state, and cannot perform RRM measurement. Therefore, the terminal device cannot determine, based on an RRM measurement result, whether the terminal device is still in a serving cell on which the terminal device previously camps, and cannot perform cell reselection based on the RRM measurement result. This reduces mobility management performance of the terminal device. When the primary module is woken up by the secondary module, the primary module cannot determine whether the terminal device currently still camps on a coverage area of the previous serving cell. Therefore, the primary module needs to perform cell search again to camp on a cell. Performing cell search again still causes a high service delay and high power consumption. Therefore, power consumption reduction effect of the foregoing working mode is affected, and service continuity of the terminal device cannot be ensured. According to the solution provided in embodiments of this application, a base station may use a WUS to carry an indication indicating a cell managed by the base station. A terminal device in a non-connected state receives the WUS, and this indicates that the terminal device is in a coverage area of the cell indicated by the indication. Then, the terminal device may listen to paging or initiate random access in the cell. In this way, the terminal device in the non-connected state can also implement mobility management of the terminal device by using the WUS without performing RRM measurement. When the terminal device in the non-connected state moves out of a cell on which the terminal device previously camps, the terminal device may listen to paging or perform random access in the cell indicated by the indication in the WUS without performing cell search again. In this solution, a probability of performing cell search by the terminal device can be reduced, so that a delay of camping on a cell by the terminal device can be reduced, power consumption caused by cell search can be reduced, and service continuity of the terminal device can also be ensured. In conclusion, when the terminal device uses the working mode based on the primary module or the secondary module, according to the method provided in embodiments of this application, a mobility management function of the terminal device can be ensured, and a probability of performing cell search by the terminal device can be reduced, thereby reducing power consumption and ensuring service continuity of the terminal device.

It should be noted that, in the method provided in embodiments of this application, a system message of each cell includes at least a system message, for example, a SIB1, that carries configuration information used by the terminal device to listen to paging or initiate random access, and may further include another SIB. In addition, because a MIB carries scheduling of the SIB1, when receiving the system message, the terminal device first receives the MIB, and then receives the system message based on a configuration in the MIB.

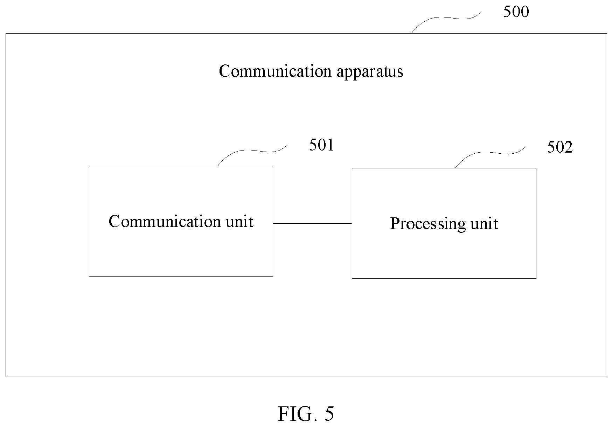

Based on a same technical concept, this application further provides a communication apparatus. A structure of the apparatus is shown in FIG. 5, and includes a communication unit 501 and a processing unit 502. The apparatus 500 may be used in the base station or the terminal device in the communication system shown in FIG. 1. Optionally, the apparatus 500 may be represented in a form of a communication device, for example, a base station or a terminal device. Alternatively, the apparatus 500 may be another apparatus that can implement a function of the communication device (the base station or the terminal device), for example, a processor or a chip in the communication device. For example, the apparatus 500 may be some programmable chips such as a field-programmable gate array (field-programmable gate array, FPGA), a complex programmable logic device (complex programmable logic device, CPLD), an application-specific integrated circuit (application-specific integrated circuits, ASIC), or a system on a chip (System on a chip, SOC).

Functions of the units in the communication apparatus 500 are described below.

In an implementation, the communication apparatus 500 is used in the terminal device. In this implementation, the functions of the units are as follows:
The communication unit 501 receives, in a non-connected state of the terminal device, a wake-up signal WUS from a base station, where the WUS includes a first indication, the first indication indicates a first cell managed by the base station, and the WUS indicates the terminal device to listen to paging or initiate random access.

The processing unit 502 is configured to: when the first cell indicated by the first indication is different from a second cell, listen to paging or initiate random access in the first cell through the communication unit 501 based on the WUS, where the second cell is a cell on which the terminal device camps before the terminal device receives the WUS.

For specific functions of the communication unit 501 and the processing unit 502, refer to the descriptions of the terminal device in the foregoing embodiments. Details are not described herein again.

It should be noted that, in this implementation, when the terminal device uses a working mode based on a primary module and a secondary module, the communication unit 501 has a communication function of the secondary module and a communication function of the primary module, that is, the communication unit 501 includes a first communication subunit having the communication function of the secondary module and a second communication subunit having the communication function of the primary module. Optionally, the first communication subunit may be a WUR, and the second communication subunit may be a transceiver.

Optionally, the first communication subunit is configured to receive a WUS from a base station when the terminal device is in a non-connected state. The second communication subunit is configured to perform other receiving and sending functions, including: receiving a paging message or a short message when the terminal device listens to paging, receiving and sending messages and receiving a system message in a random access process performed by the terminal device, receiving a reference signal and receiving a synchronization signal when the terminal device performs RRM measurement, and the like.

When the secondary module has a processing function, the processing unit 502 has the processing function of the secondary module and a processing function of the primary module, that is, the processing unit 502 includes a first processing subunit having the processing function of the secondary module and a second processing subunit having the processing function of the primary module.

In an implementation, when the terminal device uses the method provided in the embodiment shown in FIG. 3, the first processing subunit is configured to demodulate the WUS, parse the WUS to obtain a first indication in the WUS, determine whether a first cell indicated by the first indication in the WUS is the same as a second cell, and notify the second processing subunit of a comparison result; and the second processing subunit is configured to listen to paging or initiate random access in the first cell and/or the second cell based on the comparison result. In this implementation, for specific functions of the first processing subunit and the second processing subunit, refer to the specific descriptions in the embodiment shown in FIG. 3. Details are not described herein again.

In another implementation, when the terminal device uses the method provided in the embodiment shown in FIG. 4, and the secondary module further has a signal parsing function in addition to a function of receiving the WUS and a wake-up function, the first processing subunit is configured to demodulate the WUS, parse the WUS to obtain a first indication in the WUS, and send the first indication to the second processing subunit; and the second processing subunit is configured to determine whether a first cell indicated by the first indication in the WUS is the same as a second cell, and listen to paging or initiate random access in the first cell and/or the second cell based on a comparison result. In this implementation, for specific functions of the first processing subunit and the second processing subunit, refer to the specific descriptions in the embodiment shown in FIG. 4. Details are not described herein again.

In another implementation, when the terminal device uses the method provided in the embodiment shown in FIG. 4, and the secondary module does not have a signal parsing function, the first processing subunit is configured to demodulate the WUS, and send the WUS to the second processing subunit. The second processing subunit is configured to parse the WUS to obtain a first indication in the WUS, determine whether a first cell indicated by the first indication is the same as a second cell, and listen to paging or initiate random access in the first cell and/or the second cell based on a comparison result. In this implementation, for specific functions of the first processing subunit and the second processing subunit, refer to the specific descriptions in the embodiment shown in FIG. 4. Details are not described herein again.

In another implementation, the communication apparatus 500 is used in the base station. In this implementation, the functions of the units are as follows:

The processing unit 502 is configured to generate a wake-up signal WUS, where the WUS includes a first indication, the first indication indicates a first cell managed by the base station, and the WUS indicates a terminal device to listen to paging or initiate random access.

The communication unit 501 is configured to send the WUS.

For specific functions of the communication unit 501 and the processing unit 502, refer to the descriptions of the base station in the foregoing embodiments. Details are not described herein again.

Optionally, in this implementation, the communication unit 501 may be implemented by using a transceiver.

It should be noted that division into the modules in the foregoing embodiments of this application is an example, and is merely logical function division. In actual implementation, there may be another division manner. In addition, function units in embodiments of this application may be integrated into one processing unit, or may exist alone physically, or two or more units may be integrated into one unit. The integrated unit may be implemented in a form of hardware, or may be implemented in a form of a software function unit.

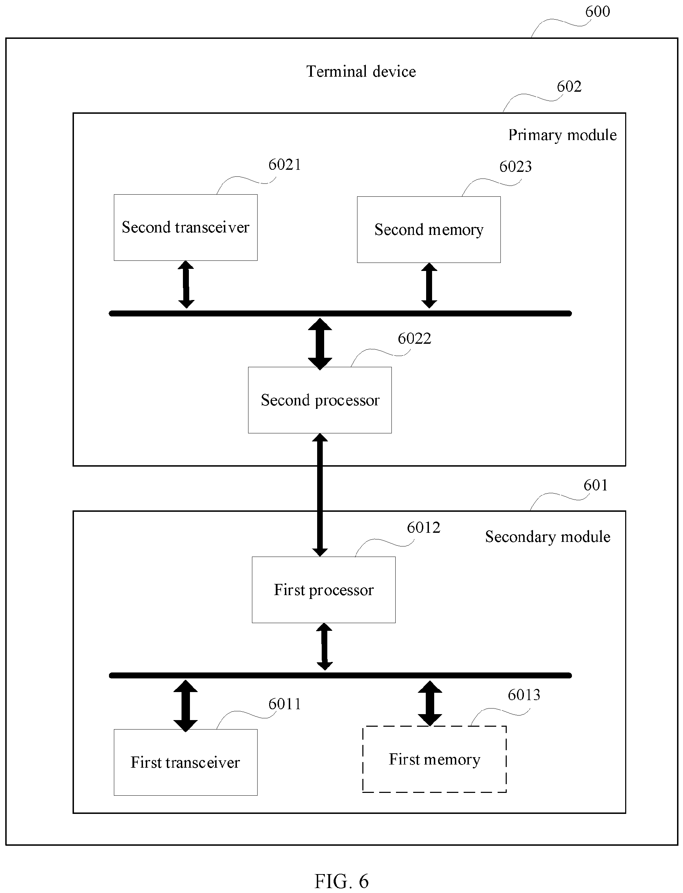

Based on a same technical concept, this application further provides a terminal device. The terminal device may be used in the mobile communication system shown in FIG. 1, and may implement the method provided in the foregoing embodiments. As shown in FIG. 6, the terminal device 600 uses a working mode based on a primary module 602 and a secondary module 601.

As shown in FIG. 6, the secondary module 601 includes a first transceiver 6011 and a first processor 6012, and the first transceiver 6011 and the first processor 6012 are connected to each other. Optionally, the secondary module 601 may further include a first memory 6013.

The primary module 602 includes a second transceiver 6021, a second processor 6022, and a second memory 6023, and the second transceiver 6021, the second processor 6022, and the second memory 6023 are connected to each other.

The first processor 6012 in the secondary module 601 and the second processor 6022 in the primary module 602 are connected to each other.

Modules in the secondary module 601, modules in the primary module 602, and the first processor 6012 and the second processor 6022 may be connected to each other by using a bus. The bus may be a peripheral component interconnect (peripheral component interconnect, PCI) bus, an extended industry standard architecture (extended industry standard architecture, EISA) bus, or the like. For ease of representation, only one bold line is used for representation in FIG. 6, but this does not mean that there is only one bus or only one type of bus.

The following first describes functions of the modules in the secondary module 601.

The first transceiver 6011 is configured to receive a WUS from a base station when the terminal device is in a non-connected state.

In a first implementation, when the terminal device uses the method provided in the embodiment shown in FIG. 3, the first processor 6012 is configured to demodulate the WUS, parse the WUS to obtain a first indication in the WUS, determine whether a first cell indicated by the first indication in the WUS is the same as a second cell, and notify the second processor 6022 in the primary module 602 of a comparison result. In this implementation, the first memory 6013 is configured to store related data of the foregoing steps performed by the first processor 6012, for example, an identifier of the second cell, a second indication indicating the second cell, a first mapping relationship, or a second mapping relationship.

In a second implementation, when the terminal device uses the method provided in the embodiment shown in FIG. 4, and the secondary module 601 further has a simple signal parsing function in addition to a function of receiving the WUS and a wake-up function, the first processor 6012 is configured to demodulate the WUS, parse the WUS to obtain a first indication in the WUS, and send the first indication to the second processor 6022 in the primary module 602.

In a third implementation, when the terminal device uses the method provided in the embodiment shown in FIG. 4, and the secondary module 601 does not have a signal parsing function, the first processor 6012 is configured to demodulate the WUS, and send the WUS to the second processor 6022 in the primary module 602.

In the second implementation or the third implementation, the secondary module 601 may not include the first memory 6013.

The following first describes functions of the modules in the primary module 602.

The second transceiver 6021 is configured to perform other receiving and sending functions of the terminal device other than receiving a WUS, and receive and send signals when the primary module 602 is in a working state. For example, the second transceiver 6021 receives a paging message or a short message when the terminal device listens to paging, receives and sends messages and receives a system message in a random access process performed by the terminal device, receives a reference signal and receives a synchronization signal when the terminal device performs RRM measurement, and the like.

In a first implementation, when the terminal device uses the method provided in the embodiment shown in FIG. 3, the second processor 6022 is configured to listen to paging or initiate random access in the first cell and/or the second cell based on the comparison result notified by the first processor 6012 in the secondary module 601.

In a second implementation, when the terminal device uses the method provided in the embodiment shown in FIG. 4, and the secondary module 601 further has a simple signal parsing function in addition to a function of receiving the WUS and a wake-up function, the second processor 6022 is configured to determine, based on the first indication sent by the first processor 6012 in the secondary module 601, whether a first cell indicated by the first indication is the same as a second cell, and listen to paging or initiate random access in the first cell and/or the second cell based on a comparison result.

In a third implementation, when the terminal device uses the method provided in the embodiment shown in FIG. 4, and the secondary module does not have a signal parsing function, the second processor 6022 is configured to parse the WUS to obtain a first indication in the WUS, determine whether a first cell indicated by the first indication is the same as a second cell, and listen to paging or initiate random access in the first cell and/or the second cell based on a comparison result.

The second memory 6023 is configured to store program instructions, data, and the like. Specifically, the program instructions may include program code, and the program code includes computer operation instructions. The second processor 6022 executes the program instructions stored in the second memory 6023, and uses the data stored in the second memory 6023, to implement the foregoing function, so as to implement the communication method provided in the foregoing embodiments.

It may be understood that the first memory 6013 or the second memory 6023 in FIG. 6 in this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), which is used as an external cache. By way of example and not limitation, many forms of RAMs are available, such as a static random access memory (Static RAM, SRAM), a dynamic random access memory (Dynamic RAM, DRAM), a synchronous dynamic random access memory (Synchronous DRAM, SDRAM), double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory for the system and the method described in this specification aims to include but is not limited to these memories and any memory of another appropriate type.

It should be further noted that specific functions of the first processor 6012 and the second processor 6022 are not described in detail in this embodiment. For the specific functions of the first processor 6012 and the second processor 6022, refer to the foregoing descriptions in the communication method provided in the embodiment shown in FIG. 2, FIG. 3, or FIG. 4 and the specific function descriptions of the communication apparatus 500 in the embodiment shown in FIG. 5. Details are not described herein again.

Based on a same technical concept, this application further provides a base station. The base station may be used in the mobile communication system shown in FIG. 1, and may implement the method provided in the foregoing embodiments. As shown in the figure, the base station 700 includes a transceiver 701, a processor 702, and a memory 703. The transceiver 701, the processor 702, and the memory 703 are connected to each other.

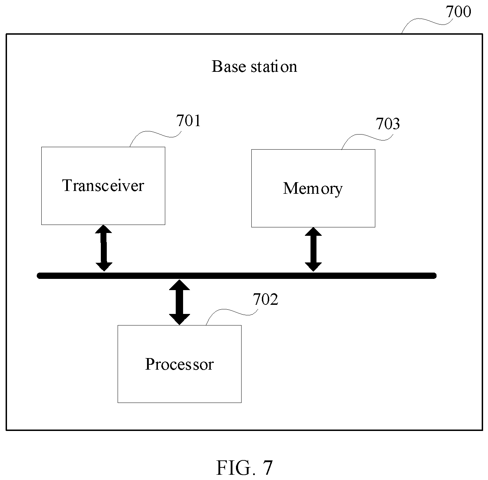

Optionally, the transceiver 701, the processor 702, and the memory 703 are connected to each other by using a bus. The bus may be a PCI bus, an EISA bus, or the like. The bus may be classified into an address bus, a data bus, a control bus, or the like. For ease of representation, only one bold line is used for representation in FIG. 7, but this does not mean that there is only one bus or only one type of bus.

The transceiver 701 is configured to receive and send signals, to implement communication and interaction with another device in the communication system. The transceiver 701 is coupled to the processor 702, to implement the communication method provided in embodiments of this application.

The processor 702 is configured to generate a WUS, and send the WUS through the transceiver 701.

It should be noted that a specific function of the processor 702 is not described in detail in this embodiment. For the specific function of the processor 702, refer to the foregoing descriptions in the communication method provided in the embodiment shown in FIG. 2, and the specific function descriptions of the communication apparatus 500 in the embodiment shown in FIG. 5. Details are not described herein again.

The memory 703 is configured to store program instructions, data, and the like. Specifically, the program instructions may include program code, and the program code includes computer operation instructions. The processor 702 executes the program instructions stored in the memory 703, and uses the data stored in the memory 703, to implement the foregoing function, so as to implement the communication method provided in the foregoing embodiments.

It may be understood that the memory 703 in FIG. 7 in this application may be a volatile memory or a non-volatile memory, or may include both a volatile memory and a non-volatile memory, and is similar to the first memory 6013 or the second memory 6023 in FIG. 6. Details are not described herein again.

Based on the foregoing embodiments, this application further provides a communication system. The communication system includes the terminal device shown in FIG. 6 and the base station shown in FIG. 7.

Based on the foregoing embodiments, an embodiment of this application further provides a computer program. When the computer program is run on a computer, the computer is enabled to perform the method provided in the foregoing embodiments.

Based on the foregoing embodiments, an embodiment of this application further provides a computer-readable storage medium. The computer-readable storage medium stores a computer program. When the computer program is executed by a computer, the computer is enabled to perform the method provided in the foregoing embodiments. Optionally, the computer may include at least the terminal device or the base station in the foregoing embodiments.

The storage medium may be any usable medium that can be accessed by a computer. This is used as an example but is not limited to: a specific example of the first memory 6013 or the second memory 6023 in FIG. 6, another optical disk storage, a magnetic disk storage medium or another magnetic storage device, or any other medium that can be used to carry or store expected program code in a form of an instruction or a data structure and that can be accessed by a computer.

Based on the foregoing embodiments, an embodiment of this application further provides a chip. The chip is configured to read a computer program stored in a memory, to implement the method provided in the foregoing embodiments.

Based on the foregoing embodiments, an embodiment of this application provides a chip system. The chip system includes a processor, configured to support a computer apparatus in implementing a function related to the terminal device or the base station in the foregoing embodiments. In a possible design, the chip system further includes a memory, and the memory is configured to store a program and data that are necessary for the computer apparatus. The chip system may include a chip, or may include a chip and another discrete component.

In conclusion, embodiments of this application provide a communication method and a device. In the method, a base station may use a WUS to carry an indication indicating a cell managed by the base station. A terminal device in a non-connected state receives the WUS, and this indicates that the terminal device is in a coverage area of the cell indicated by the indication. Then, the terminal device may listen to paging or initiate random access in the cell. According to the method, the terminal device in the non-connected state may determine, by using the WUS, whether the terminal device is still in a coverage area of a cell on which the terminal device previously camps, to implement mobility management. Further, after receiving the WUS, the terminal device in the coverage area of the cell indicated by the indication included in the WUS may listen to paging or initiate random access in the indicated cell. This can increase a probability of successfully detecting paging or initiating random access, and avoid a case in which the terminal device may have left a cell on which the terminal device previously camps but the terminal device still performs paging or initiates random access in the original camping cell, thereby increasing a communication success probability of the terminal device and reducing unnecessary power consumption.

A person skilled in the art should understand that embodiments of this application may be provided as a method, a system, or a computer program product. Therefore, this application may be in a form of a hardware-only embodiment, a software-only embodiment, or an embodiment combining software and hardware aspects. In addition, this application may be in a form of a computer program product implemented on one or more computer-usable storage media (including but not limited to a magnetic disk memory, a CD-ROM, an optical memory, and the like) including computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art may make various modifications and variations to this application without departing from the spirit and the scope of this application. Thus, this application is intended to cover these modifications and variations, provided that they fall within the scope of the claims of this application and their equivalent technologies.

## Claims

1. A communication method, applied to a terminal device, and comprising:
receiving, in a non-connected state, a wake-up signal WUS from a base station, wherein the WUS comprises a first indication, the first indication indicates a first cell managed by the base station, and the WUS indicates the terminal device to listen to paging or initiate random access; and
when the first cell indicated by the first indication is different from a second cell, listening to paging or initiating random access in the first cell based on the WUS, wherein the second cell is a cell on which the terminal device camps before the terminal device receives the WUS.

2. The method according to claim 1, wherein the first indication is determined based on an identifier of the first cell, or is information that identifies the first cell in a tracking area; and
the method further comprises: determining that the first cell indicated by the first indication is different from the second cell, comprising:
determining the identifier of the first cell based on a first mapping relationship and the first indication, wherein the first mapping relationship is a correspondence between the first indication and the identifier of the first cell; and determining that the identifier of the first cell is different from a stored identifier of the second cell; or
determining a second indication based on a second mapping relationship and an identifier of the second cell, wherein the second indication indicates the second cell, and the second mapping relationship is a correspondence between the second indication and the identifier of the second cell; and determining that the first indication is different from the second indication, wherein
the identifier of the first cell is a cell global identity CGI or a physical cell identity PCI of the first cell, and the identifier of the second cell is a CGI or a PCI of the second cell.

3. The method according to claim 2, wherein the first mapping relationship or the second mapping relationship is preconfigured.

4. The method according to any one of claims 1 to 3, wherein the listening to paging or initiating random access in the first cell based on the WUS comprises:
determining the identifier of the first cell based on the first indication, wherein the identifier of the first cell is the CGI or the PCI of the first cell; and
receiving a system message of the first cell based on the identifier of the first cell; and listening to paging or initiating random access based on a configuration in the system message of the first cell.

5. The method according to claim 4, wherein the determining the identifier of the first cell based on the first indication comprises:
determining the identifier of the first cell based on the first indication and information about the first cell that is comprised in information about at least one cell on which the terminal device historically camps, wherein the information about the first cell comprises the identifier of the first cell and the first indication; or
determining the identifier of the first cell based on the first mapping relationship and the first indication, wherein the first mapping relationship is the correspondence between the first indication and the identifier of the first cell.

6. The method according to any one of claims 1 to 5, wherein the WUS further comprises indication information indicating the terminal device; or the WUS is scrambled based on an identifier of the terminal device.

7. A communication method, applied to a base station, and comprising:
generating a wake-up signal WUS, wherein the WUS comprises a first indication, the first indication indicates a first cell managed by the base station, and the WUS indicates a terminal device to listen to paging or initiate random access; and
sending the WUS.

8. The method according to claim 7, wherein the first indication is determined based on an identifier of the first cell, or is information that identifies the first cell in a tracking area; and the method further comprises:
determining the first indication based on a first mapping relationship and the identifier of the first cell, wherein the first mapping relationship is a correspondence between the first indication and the identifier of the first cell.

9. The method according to claim 8, wherein the first mapping relationship is preconfigured.

10. The method according to any one of claims 7 to 9, wherein the WUS further comprises indication information indicating the terminal device; or the WUS is scrambled based on an identifier of the terminal device; and
the sending the WUS comprises:
sending the WUS to the terminal device.

11. A communication apparatus, used in a terminal device, and comprising:
a communication unit, configured to receive, in a non-connected state of the terminal device, a wake-up signal WUS from a base station, wherein the WUS comprises a first indication, the first indication indicates a first cell managed by the base station, and the WUS indicates the terminal device to listen to paging or initiate random access; and
a processing unit, configured to: when the first cell indicated by the first indication is different from a second cell, listen to paging or initiate random access in the first cell based on the WUS, wherein the second cell is a cell on which the terminal device camps before the terminal device receives the WUS.

12. The apparatus according to claim 11, wherein the first indication is determined based on an identifier of the first cell, or is information that identifies the first cell in a tracking area; and
the processing unit is further configured to determine that the first cell indicated by the first indication is different from the second cell, and is specifically configured to:
determine the identifier of the first cell based on a first mapping relationship and the first indication, wherein the first mapping relationship is a correspondence between the first indication and the identifier of the first cell; and determine that the identifier of the first cell is different from a stored identifier of the second cell; or
determine a second indication based on a second mapping relationship and an identifier of the second cell, wherein the second indication indicates the second cell, and the second mapping relationship is a correspondence between the second indication and the identifier of the second cell; and determine that the first indication is different from the second indication, wherein
the identifier of the first cell is a cell global identity CGI or a physical cell identity PCI of the first cell, and the identifier of the second cell is a CGI or a PCI of the second cell.

13. The apparatus according to claim 12, wherein the first mapping relationship or the second mapping relationship is preconfigured.

14. The apparatus according to any one of claims 11 to 13, wherein when listening to paging or initiating random access in the first cell based on the WUS, the processing unit is specifically configured to:
determine the identifier of the first cell based on the first indication, wherein the identifier of the first cell is the CGI or the PCI of the first cell; and
receive a system message of the first cell based on the identifier of the first cell; and listen to paging or initiate random access based on a configuration in the system message of the first cell; and
the communication unit is further configured to receive the system message of the first cell.

15. The apparatus according to claim 14, wherein when determining the identifier of the first cell based on the first indication, the processing unit is specifically configured to:
determine the identifier of the first cell based on the first indication and information about the first cell that is comprised in information about at least one cell on which the terminal device historically camps, wherein the information about the first cell comprises the identifier of the cell and the first indication; or
determine the identifier of the first cell based on the first mapping relationship and the first indication, wherein the first mapping relationship is the correspondence between the first indication and the identifier of the first cell.

16. The apparatus according to any one of claims 11 to 15, wherein the WUS further comprises indication information indicating the terminal device; or the WUS is scrambled based on an identifier of the terminal device.

17. A communication apparatus, used in a base station, and comprising:
a processing unit, configured to generate a wake-up signal WUS, wherein the WUS comprises a first indication, the first indication indicates a first cell managed by the base station, and the WUS indicates a terminal device to listen to paging or initiate random access; and
a communication unit, configured to send the WUS.

18. The apparatus according to claim 17, wherein the first indication is determined based on an identifier of the first cell, or is information that identifies the first cell in a tracking area; and the processing unit is further configured to:
determine the first indication based on a first mapping relationship and the identifier of the first cell, wherein the first mapping relationship is a correspondence between the first indication and the identifier of the first cell.

19. The apparatus according to claim 18, wherein the first mapping relationship is preconfigured.

20. The apparatus according to any one of claims 17 to 19, wherein the WUS further comprises indication information indicating the terminal device; or the WUS is scrambled based on an identifier of the terminal device; and
the communication unit is specifically configured to:
send the WUS to the terminal device.

21. A terminal device, comprising:
a memory, configured to store a computer program; and
a processor, configured to execute the computer program stored in the memory, to implement the method according to any one of claims 1 to 6.

22. A base station, comprising:
a memory, configured to store a computer program; and
a processor, configured to execute the computer program stored in the memory, to implement the method according to any one of claims 7 to 10.

23. A computer-readable storage medium, wherein the computer storage medium stores a computer program, and when the computer program is executed by a computer, the computer is enabled to perform the method according to any one of claims 1 to 10.

24. A chip, wherein the chip is configured to read a computer program stored in a memory, to perform the method according to any one of claims 1 to 10.
